# EUROPÄISCHE PATENTSCHRIFT

(11) **EP 1 716 659 B1**
(45) Veröffentlichungstag und Bekanntmachung des Hinweises auf die Patenterteilung: **09.04.2014**
(21) Anmeldenummer: 05716639.9
(22) Anmeldetag: 08.02.2005
(51) Int. Cl.: H04L 5/02, H04B 7/26

(54) **VERFAHREN UND VORRICHTUNG ZUR ZUWEISUNG VON SUBBÄNDERN EINES FREQUENZBANDES**
METHOD AND DEVICE FOR THE ALLOCATION OF SUB-BANDS OF A FREQUENCY BAND
PROCEDE ET DISPOSITIF POUR L'ALLOCATION DE SOUS-BANDES D'UNE BANDE DE FREQUENCE

(30) Priorität: 18.02.2004 EP 04003594
(43) Veröffentlichungstag der Anmeldung: 02.11.2006
(73) Patentinhaber: Nokia Solutions and Networks GmbH & Co. KG, 81541 Munich (DE)
(72) Erfinder: COSTA, Elena, 81739 München (DE); EICHINGER, Josef, 85464 Neufinsing (DE); SCHULZ, Egon, 80993 München (DE); ZIRWAS, Wolfgang, 82194 MÜNCHEN-LOCKHAUSEN (DE)
(74) Vertreter: Weidel, Gottfried
(86) Internationale Anmeldenummer: PCT/EP2005/050528
(87) Internationale Veröffentlichungsnummer: WO 2005/081448

(56) Entgegenhaltungen:
- EP-A- 0 680 168
- EP-A- 0 915 586
- DE-A- 19 845 057
- ROHLING H ET AL: "Performance comparison of different multiple access schemes for the downlink of an OFDM communication system" VEHICULAR TECHNOLOGY CONFERENCE, 1997, IEEE 47TH PHOENIX, AZ, USA 4-7 MAY 1997, NEW YORK, NY, USA,IEEE, US, 4. Mai 1997 (1997-05-04), Seiten 1365-1369, XP010229083 ISBN: 0-7803-3659-3

## Beschreibung

Die Erfindung betrifft ein Verfahren zur Zuweisung von Subbändern eines in eine Mehrzahl von Subbändern aufgeteilten Frequenzbandes in zumindest einem Teilbereich eines Funkkommunikationssystems. Weiterhin betrifft die Erfindung eine Einrichtung zur Durchführung des Verfahrens.

In Funkkommunikationssystemen werden Signale bzw. Nachrichten wie beispielsweise Signalisierungsnachrichten oder Nachrichten mit Sprachinformation, Bildinformation, Videoinformation, SMS (Short Message Service), MMS (Multimedia Messaging Service) oder anderen Daten mit Hilfe von elektromagnetischen Wellen über eine Funkschnittstelle zwischen sendender und empfangender Station übertragen. In einem Mobilfunkkommunikationssystem handelt es sich bei zumindest einem Teil der teilnehmerseitigen Funkstationen um mobile Funkstationen. Das Abstrahlen der elektromagnetischen Wellen erfolgt mit Trägerfrequenzen, die in dem für das jeweilige System vorgesehenen Frequenzband liegen.

Mobilfunkkommunikationssysteme sind oftmals als zellulare Systeme z.B. nach dem Standard GSM (Global System for Mobile Communication) oder UMTS (Universal Mobile Telecommunications System) mit einer Netzinfrastruktur bestehend z.B. aus Basisstationen, Einrichtungen zur Kontrolle und Steuerung der Basisstationen und weiteren netzseitigen Einrichtungen ausgebildet. Außer diesen weiträumig organisierten (supralokalen) zellularen, hierarchischen Funknetzen gibt es auch drahtlose lokale Netze (WLANs, Wireless Local Area Networks) mit einem in der Regel räumlich deutlich stärker begrenzten Funkabdeckungsbereich. Die von den Access Points der WLANs abgedeckten Zellen sind mit einem Durchmesser von bis zu einigen hundert Metern im Vergleich zu üblichen Mobilfunkzellen klein. Beispiele verschiedener Standards für WLANs sind HiperLAN, DECT, IEEE 802.11, Bluetooth und WATM. Sowohl in zellularen Funkkommunikationssystemen als auch in WLANs kann ein sogenannter Adhoc-Modus zum Einsatz kommen, in welchem teilnehmerseitige Funkstationen untereinander kommunizieren, ohne dass die Kommunikation durch eine netzseitige Einrichtung gesteuert wird. In diesem Fall ist es möglich, dass eine teilnehmerseitige Funkstation zeitweise oder permanent zumindest manche Steuerfunktionen wahrnimmt.

In Anbetracht der oftmals erforderlichen hohen Datenraten bei der Funkübertragung und der hierdurch bedingten großen Bandbreiten von Frequenzbändern wird bei einigen Übertragungsverfahren, wie z.B. bei OFDM (Orthogonal Frequency Division Multiplexing), ein breites Frequenzband in eine Mehrzahl an Subbändern aufgeteilt. Hierbei ist zu unterscheiden zwischen dem OFDM-TDMA-Verfahren, welches z.B. bei IEEE 802.11a und Hiperlan Type 2 eingesetzt wird, und dem OFDM-FDMA-Verfahren, welches z.B. bei IEEE 802.16a eingesetzt wird. Bei dem OFDM-TDMA-Verfahren steht jedem Teilnehmer das gesamte Frequenzband in wiederkehrenden Zeitschlitzen zur Verfügung. Hingegen wird bei dem OFDM-FDMA-Verfahren das gesamte Frequenzband grundsätzlich unter eine Mehrzahl von Teilnehmern aufgeteilt.

Das Dokument EP 0 680 168 A2 beschreibt die Aufspaltung des Zeit-Frequenz-Spektrums in Frequenzbänder und Zeitschlitze. Den Teilnehmern können eines oder mehrere Frequenzbänder für einen oder mehrere Zeitschlitze zugewiesen werden.

Das Dokument DE 198 45 057 A1 beschreibt die Übertragung von Übertragungssignalen in einer Mehrzahl von Übertragungsfrequenzbändern. Die Bandbreite wird einer Verbindung abhängig von der Übertragungsrate zugewiesen. Es ist möglich, dass eine Verbindung den gesamten zur Verfügung stehenden Frequenzbereich nutzt.

Das Dokument
H. Rohling, R. Grünheid: "Performance Comparison of Different Multiple Access Schemes for the Downlink of an OFDM Communication System, Vehicular Technology Conference, 1997, IEEE 47th Phoenix, AZ, USA 4-7 May 1997, New York, NY, USA IEEE, US, 4. Mai 1997, S. 1365-1369 beschreibt und vergleicht die Vielfachzugriffsverfahren OFDM-TDMA, OFDM-FDMA und OFDM-CDMA.

Der Erfindung liegt die Aufgabe zugrunde, ein verbessertes Verfahren zur Kommunikation per Funk aufzuzeigen, bei dem ein Frequenzband in eine Mehrzahl von Subbändern aufgeteilt ist. Weiterhin soll eine Einrichtung zur Unterstützung des Verfahrens vorgestellt werden.

Diese Aufgabe wird hinsichtlich des Verfahrens durch ein Verfahren mit den Merkmalen des Anspruchs 1 gelöst.

Vorteilhafte Ausgestaltungen und Weiterbildungen sind Gegenstand von Unteransprüchen.

Bei dem Verfahren zur Zuweisung von Subbändern eines in eine Mehrzahl von Subbändern aufgeteilten Frequenzbandes in zumindest einem Teilbereich eines Funkkommunikationssystems werden
- zeitweise gemäß einer ersten Betriebsweise alle für die Versendung von Signalen durch Funkstationen zur Verfügung stehenden benachbarten Subbänder jeweils einer Funkstation zur Versendung von Signalen zugewiesen, und
- zeitweise gemäß einer zweiten Betriebsweise einer Mehrzahl von Funkstationen unterschiedliche Subbänder des Frequenzbandes zur Versendung von Signalen zugewiesen, wobei es sich bei dem oder den einer jeden Funkstation der Mehrzahl von Funkstationen zugewiesenen Subbändern um jeweils einen Block von untereinander benachbarten Subbändern handelt.

Bei den Funkstationen kann es sich um teilnehmerseitige, insbesondere mobile, Funkstationen handeln. Das Verfahren zur Zuweisung von Subbändern wird in zumindest einem Teilbereich eines Funkkommunikationssystems durchgeführt. Zur Versendung von Signalen durch die Funkstationen des Funkkommunikationssystems bzw. des Teilbereichs des Funkkommunikationssystems steht ein Frequenzband zur Verfügung, welches in eine Mehrzahl von Subbändern aufgeteilt ist, wobei es sich bei diesen Subbändern um benachbarte Subbändern handelt. Das Funkkommunikationssystem kann ein zellulares System darstellen, wobei es sich bei einem Teilbereich des Funkkommunikationssystems um eine oder mehrere Zellen handeln kann. In diesem Fall erfolgt die Versendung von Signalen durch die Funkstationen an eine netzseitige Einrichtung. Das betrachtete Funkkommunikationssystem bzw. der Teilbereich des Funkkommunikationssystems kann auch realisiert werden durch ein Adhoc-System, d.h. durch Funkstationen in einem Adhoc-Modus, oder durch einen örtlich begrenzten Bereich eines Adhoc-Systems, wobei die Versendung von Signalen in diesem Fall von teilnehmerseitiger Funkstation zu teilnehmerseitiger Funkstation erfolgt.

Gemäß der ersten Betriebsweise werden alle benachbarten Subbänder jeweils einer einzigen Funkstation zugewiesen. Somit existieren in der ersten Betriebsweise keine zu den einer Funkstation zugewiesenen Subbändern benachbarte Subbänder, welche einer anderen Funkstation zugewiesen werden. Möglich ist jedoch, dass in der ersten Betriebsweise zusätzlich ein weiteres Frequenzband eingesetzt wird, dessen Subbänder nicht benachbart zu denjenigen des erfindungsgemäß verwendeten Frequenzbandes sind, so dass eine Frequenzlücke zwischen dem weiteren und dem erfindungsgemäß verwendeten Frequenzband existiert. Bei dem weiteren Frequenzband können die Subbänder gemäß einer anderen Vorgehensweise als der ersten Betriebsweise entsprechend zugewiesen werden.

In der zweiten Betriebsweise wird mehreren Funkstationen jeweils ein Block an Subbändern zugewiesen, wobei ein Block aus einem oder mehreren Subbändern bestehen kann. Die Subbänder eines Blockes sind benachbart, so dass zwischen den Subbändern eines Blockes keine einer anderen Funkstation zugewiesenen Subbänder existieren.

Die Zuweisung von Subbändern kann durch einen netzseitige Einrichtung, wie zum Beispiel durch eine Basisstation eines zellularen Funkkommunikationssystems oder durch einen Access Point eines WLAN, erfolgen. Es ist jedoch auch möglich, dass in einem Adhoc-System eine teilnehmerseitige Funkstation die Aufgabe der Zuweisung von Subbändern an andere teilnehmerseitige Funkstationen wahrnimmt.

In weiterbildung der Erfindung erfolgt ein Wechsel zwischen der ersten und der zweiten Betriebsweise abhängig von mindestens einem von einer Funkstation in Anspruch genommenen Dienst. Hierbei können insbesondere Charakteristika von Diensten, welche die Nachrichtenversendung von Funkstationen betreffen, berücksichtigt werden, wie zum Beispiel, ob es sich um eine Übertragung von Sprache, Daten oder Signalisierungsinformationen, wie z.B. ARQ Meldungen (ARQ: Automatic Repeat Request) oder Synchronisationsbits, handelt, ob die Übertragung zeitkritisch ist, wie groß die benötigte Bandbreite beziehungsweise Datenrate ist, oder welche Übertragungsqualität erforderlich ist.

Einer anderen Weiterbildung der Erfindung gemäß werden in der ersten Betriebsweise zumindest zeitweise jeder Funkstation, welcher die Subbänder zugewiesen werden, die Subbänder für die gleiche Zeitspanne zugewiesen. So können zum Beispiel Zeitschlitze existieren, wobei jeder Funkstation die Subbänder maximal einen Zeitschlitz am Stück zugewiesen werden. Auch in der zweiten Betriebsweise ist es möglich, dass zumindest zeitweise jeder Funkstation, welcher eines oder mehrere Subbänder zugewiesen werden, diese Subbänder für die gleiche Zeitspanne zugewiesen werden.

Vorteilhaft ist es, wenn in der zweiten Betriebsweise eine erste Anzahl an Subbändern zwischen dem einer ersten Funkstation und dem einer zweiten Funkstation zugewiesen Block von Subbändern keiner Funkstation zugewiesen wird. In diesem Fall existiert zwischen zwei Blöcken mindestens ein Subband, welches aktuell nicht von einer Funkstation zur Signalübertragung verwendet werden kann. Die erste Anzahl an Subbändern kann insbesondere von einer Synchronisierung zwischen von der ersten und der zweiten Funkstation gesendeten Signalen und/oder von einem von der ersten Funkstation und/oder der zweiten Funkstation in Anspruch genommenen Dienst abhängen. Bezüglich der Synchronisierung, welche eine Zeit- und/oder eine Frequenzsynchronisierung betreffen kann, ist es möglich, eine aktuell vorhandene Synchronisierung, oder auch eine zu erreichende Synchronisierung einzubeziehen. Bezüglich der Auswirkung des in Anspruch genommenen Dienstes auf die erste Anzahl an Subbändern ist es insbesondere vorteilhaft, die für den jeweiligen Dienst erforderliche Übertragungsqualität einzubeziehen.

In Weiterbildung der Erfindung wird in der zweiten Betriebsweise eine zweite Anzahl an Subbändern, welche sich am Rande des Blocks von einer dritten Funkstation zugewiesenen Subbändern befinden und zu einem einer vierten Funkstation zugewiesenen Block von Subbändern benachbart sind, von der dritten Funkstation zur Versendung von Signalen mit einer niedrigeren Sendeleistung als das der zweiten Anzahl an Subbändern benachbarte, der dritten Funkstation zugewiesene Subband verwendet. Es ist vorteilhaft, wenn die dritte Funkstation auf diese Weise mit den Subbändern an beiden Rändern ihres Blockes verfährt. Vorzugsweise verwendet auch die vierte Funkstation, deren Subbänder an die Subbänder der dritten Funkstation angrenzen, eine niedrigere Sendeleistung für die Subbänder am Rand.

In Ausgestaltung der Erfindung hängt die zweite Anzahl an Subbändern und/oder die für die zweite Anzahl von Subbändern verwendete Sendeleistung von einer Synchronisierung zwischen von der dritten und der vierten Funkstation gesendeten Signalen und/oder von einem von der dritten Funkstation und/oder der vierten Funkstation in Anspruch genommenen Dienst ab. Bezüglich der Synchronisierung, welche eine Zeit- und/oder eine Frequenzsynchronisierung betreffen kann, ist es möglich, eine aktuell vorhandene Synchronisierung, oder auch eine zu erreichende Synchronisierung einzubeziehen. Bezüglich der Auswirkung des in Anspruch genommenen Dienstes auf die zweite Anzahl an Subbändern ist es insbesondere vorteilhaft, die für den jeweiligen Dienst erforderliche Übertragungsqualität einzubeziehen.

In Weiterbildung der Erfindung wird in der zweiten Betriebsweise eine dritte Anzahl an Subbändern, welche sich am Rand des Blocks von einer fünften Funkstation zugewiesenen Subbändern befinden und zu einem einer sechsten Funkstation zugewiesenen Block von Subbändern benachbart sind, von der fünften Funkstation zur Versendung von Signalen mit einer anderen Kanalkodierung und/oder Modulation als das der dritten Anzahl an Subbändern benachbarte, der fünften Funkstation zugewiesene Subband verwendet. Durch die Verwendung einer anderen Kanalkodierung oder Modulation kann erreicht werden, dass die auf den am Rande liegenden Subbändern eines Blockes übertragenen Signale mit einer ähnlich guten Qualität empfangen werden können wie die auf den mittleren Subbändern übertragenen Signale, obwohl die am Rande liegenden Subbänder Interferenz von Subbändern am Rande eines Blockes einer anderen Funkstation erfahren.

Einer Ausgestaltung der Erfindung gemäß hängt die dritte Anzahl an Subbändern und/oder die für die dritte Anzahl an Subbändern verwendete Kanalkodierung und/oder Modulation von einer Synchronisierung zwischen von der fünften und der sechsten Funkstation gesendeten Signalen und/oder von einem von der fünften Funkstation und/oder der sechsten Funkstation in Anspruch genommenen Dienst ab. Bezüglich der Synchronisierung, welche eine Zeit- und/oder eine Frequenzsynchronisierung betreffen kann, ist es möglich, eine aktuell vorhandene Synchronisierung, oder auch eine zu erreichende Synchronisierung einzubeziehen. Bezüglich der Auswirkung des in Anspruch genommenen Dienstes auf die dritte Anzahl an Subbändern ist es insbesondere vorteilhaft, die für den jeweiligen Dienst erforderliche Übertragungsqualität einzubeziehen.

Vorteilhaft ist es, wenn eine Einrichtung
- die Zuweisung einer ersten Anzahl an Subbändern zwischen dem einer ersten Funkstation und dem einer zweiten Funkstation zugewiesenen Block an Subbändern an keine Funkstation, und/oder
- die Verwendung einer zweiten Anzahl von Subbändern, welche sich am Rande des Blocks von einer dritten Funkstation zugewiesenen Subbändern befinden und zu einem einer vierten Funkstation zugewiesenen Block von Subbändern benachbart sind, von der dritten Funkstation zur Versendung von Signalen mit einer niedrigeren Sendeleistung als das der zweiten Anzahl von Subbändern benachbarte, der dritten Funkstation zugewiesene Subband, und/oder
- die Verwendung einer dritten Anzahl an Subbändern, welche sich am Rand des Blocks von einer fünften Funkstation zugewiesenen Subbändern befinden, und zu einem einer sechsten Funkstation zugewiesenen Block von Subbändern benachbart sind, von der fünften Funkstation zur Versendung von Signalen mit einer anderen Kanalkodierung und/oder Modulation als das der dritten Anzahl an Subbändern benachbarte, der fünften Funkstationen zugewiesenen Subband,
anweist in Abhängigkeit von mindestens einer Eigenschaft von mindesten einer Funkstation. Eine solche Eigenschaft einer Funkstation kann insbesondere darin bestehen, ob die Funkstation in der Lage ist, für Subbänder am Rand eines Blockes eine niedrigere Sendeleistung anzuwenden als für Subbänder in der Mitte des Blockes, und/oder für Subbänder am Rand eines Blockes ein unterschiedliches Verfahren zur Kanalkodierung und/oder Modulation anzuwenden, als für die Subbänder in der Mitte des Blockes. Von der Einrichtung können bei einer Entscheidung über eine solche Anweisung insbesondere Eigenschaften der ersten und/oder der zweiten und/oder der dritten und/oder der vierten und/oder der fünften und/oder der pechsten Funkstation berücksichtigt werden. Es ist jedoch auch möglich, dass eine oder mehrere Eigenschaften aller sich im Funkkommunikationssystem bzw. im betrachteten Teilbereich des Funkkommunikationssystems befindlichen Funkstationen Berücksichtigung finden. Bei der Einrichtung, durch welche die Anweisungen erfolgen, kann es sich wie oben erläutert um eine netzseitige Einrichtung oder auch um eine teilnehmerseitige Funkstation handeln.

Vorteilhaft ist es, wenn die Anzahl der Subbänder, in welche das Frequenzband in der ersten Betriebsweise aufgeteilt ist, sich von der Anzahl der Subbänder, in welche das Frequenzband in der zweiten Betriebsweise aufgeteilt ist, unterscheidet. So kann beispielsweise gemäß der ersten Betriebsweise das Frequenzband in 100 Subbänder aufgeteilt werden, welche alle einer bestimmten Funkstation zur Versendung von Signalen zugewiesen werden. Gemäß der zweiten Betriebsweise kann hingegen das Frequenzband in 200 Subbänder aufgeteilt werden, welche blockweise an Funkstationen zugewiesen werden.

Die oben genannte Aufgabe hinsichtlich der Einrichtung in einem Funkkommunikationssystem wird durch eine Einrichtung mit den Merkmalen des Anspruchs 13 gelöst.

Eine vorteilhafte Weiterbildung ist Gegenstand eines Unteranspruchs.

Die erfindungsgemäße Einrichtung weist Mittel zum Zuweisen von Subbändern des Frequenzbandes an Funkstationen zur Versendung von Signalen auf, so dass
- zeitweise gemäß einer ersten Betriebsweise alle für die Versendung von Signalen durch Funkstationen zur Verfügung stehenden benachbarten Subbänder jeweils einer Funkstation zur Versendung von Signalen zugewiesen sind, und
- zeitweise gemäß einer zweiten Betriebsweise einer Mehrzahl von Funkstationen unterschiedliche Subbänder des Frequenzbandes zur Versendung von Signalen zugewiesen sind, wobei es sich bei dem oder den einer jeden Funkstation der Mehrzahl von Funkstationen zugewiesenen Subbändern um jeweils einen Block von untereinander benachbarten Subbändern handelt.

In Weiterbildung der Erfindung umfasst die Einrichtung weiterhin Mittel zum Versenden von Anweisungen an Funkstationen, wobei diese Anordnungen sich auf am Rand von Blöcken befindliche Subbänder beziehen. Die Anordnungen betreffen die Verwendung einer bestimmten, von der Sendeleistung der Subbänder in der Mitte des jeweiligen Blockes unterschiedlichen Sendeleistung, und/oder eines bestimmten, von dem Kanalkodierverfahren der Subbänder in der Mitte des jeweiligen Blockes unterschiedlichen Kanalkodierverfahrens und/oder eines bestimmten, von dem Modulationsverfahren der Subbänder in der Mitte des jeweiligen Blockes unterschiedlichen Modulationsverfahrens.

Die erfindungsgemäße Einrichtung, welche sowohl in Form einer netzseitigen Einrichtung als auch einer teilnehmerseitigen Funkstation realisiert werden kann, eignet sich insbesondere zur Durchführung des erfindungsgemäßen Verfahrens, wobei dies auch auf die Ausgestaltungen und Weiterbildungen zutrifft. Hierzu kann sie weitere geeignete Mittel aufweisen.

Im folgenden wird die Erfindung anhand eines Ausführungsbeispiels näher erläutert. Dabei zeigen:
- Figur 1:: einen Ausschnitt aus einem Funkkommunikationssystem,
- Figur 2:: ein in Subbänder aufgeteiltes Frequenzband,
- Figur 3:: eine erste erfindungsgemäße Verwendung von Subbändern,
- Figur 4:: eine zweite erfindungsgemäße Verwendung von Subbändern,
- Figur 5:: eine dritte erfindungsgemäße Verwendung von Subbändern.

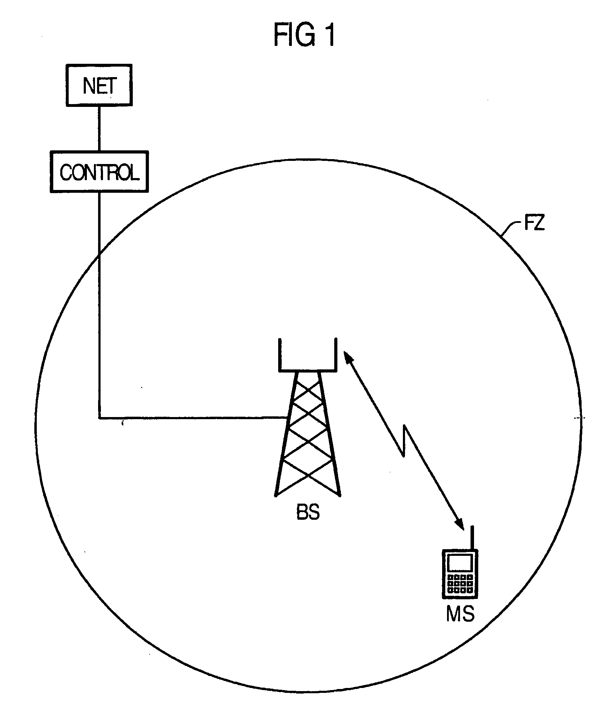

Der in Figur 1 dargestellte Ausschnitt aus einem Funkkommunikationssystem umfasst die -vereinfachend als Kreis dargestellte- Funkzelle FZ einer Basisstation BS. In der Funkzelle FZ ist beispielhaft die Teilnehmerstation MS eingezeichnet, welche mit der Basisstation BS über Funk kommunizieren kann. Die Basisstation BS ist mit einer netzseitigen Steuereinrichtung CONTROL verbunden, welche u.a. für die Vergabe von Funkressourcen an Teilnehmerstationen verantwortlich ist. Die netzseitige Steuereinrichtung CONTROL informiert die Basisstation BS darüber, welche Funkressourcen für die Versendung von Signalen zwischen der Basisstation BS und der Teilnehmerstation MS zu verwenden sind. Die Basisstation BS übermittelt die entsprechenden Zuweisungen von Funkressourcen dann an die Teilnehmerstation MS. Die Infrastruktur des Funkkommunikationssystems weist weitere netzseitige Einrichtungen NET auf, gegebenenfalls weitere vorhandene Basisstationen mit ihren Funkzellen sind der Übersichtlichkeit halber in Figur 1 nicht dargestellt.

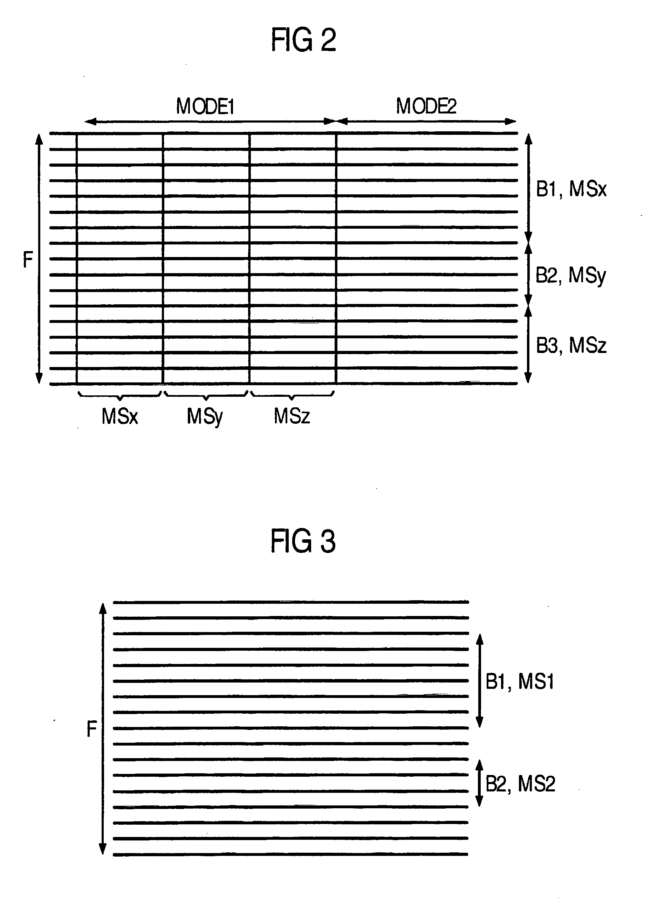

Die Kommunikation zwischen den Teilnehmerstationen in der Funkzelle FZ und der Basisstation BS erfolgt unter Verwendung eines breiten Frequenzbandes F, welches in Figur 2 dargestellt ist. Das breite Frequenzband F ist in eine Vielzahl an gleich breiten OFDM-Subbändern aufgeteilt, welche durch horizontale Balken innerhalb des Frequenzbandes F veranschaulicht sind. Im folgenden wird die Zuweisung der Subbänder an Teilnehmerstationen für eine Übertragung in Aufwärtsrichtung, d.h. von der jeweiligen Teilnehmerstation zur Basisstation, betrachtet. Eine gegebenenfalls stattfindende Verwendung der gleichen Subbänder in Abwärtsrichtung ist im folgenden nicht berücksichtigt.

Das Frequenzband F ist in der Figur 2 zur leichteren Veranschaulichung in lediglich eine kleine Anzahl an Subbändern aufgeteilt. In Realität hingegen erweist sich z.B. ein System mit 512 Subbändern eines Frequenzbandes der Breite 20 MHz mit einer Subbandbreite von 39 KHz und der Dauer eines OFDM-Symbols von 26 Mikrosekunden als vorteilhaft Im allgemeinen hängt die geeignete Anzahl an Subbändern, welche z.B. auch 2000 bei einer Bandbreite des Frequenzbandes von 100 MHz betragen kann, von Parametern des betrachteten Funkkommunikationssystems ab.

In einer ersten Betriebsweise MODE1 werden zuerst alle Subbänder des Frequenzbandes F einer Teilnehmerstation MSx, dann der Teilnehmerstation MSy, und schließlich der Teilnehmerstation MSz zugewiesen. Die Länge der exklusiven Zuweisung des Frequenzbandes F kann sich z.B. an einer Zeitschlitzstruktur orientieren, so dass jeder der Teilnehmerstationen MSx, MSy, MSz das Frequenzband F gleich lange zugewiesen ist. Hierbei ist zu beachten, dass eine Teilnehmerstation nicht kontinuierlich Signale übertragen kann, sondern nur in den ihr zugewiesenen Zeitschlitzen. Zu Ende eines Zeitschlitzes muss die Übertragung unterbrochen werden, und kann in der ersten Betriebsweise MODE1 erst dann fortgesetzt werden, wenn der Teilnehmerstation erneut alle Subbänder einen Zeitschlitz lang zugewiesen werden. Es ist jedoch auch möglich, in der ersten Betriebsweise MODE1 den Teilnehmerstationen die Subbänder jeweils unterschiedlich lange zuzuweisen, abhängig vom Funkressourcenbedarf der jeweiligen Teilnehmerstationen.

Das Funkkommunikationssystem wird jedoch nicht ausschließlich gemäß der ersten Betriebsweise MODE1 betrieben, sondern zeitweise auch gemäß einer zweiten Betriebsweise MODE2. In der zweiten Betriebsweise MODE2 wird nicht das gesamte Frequenzband einer Teilnehmerstation zugewiesen, vielmehr existieren gleichzeitig mehrere Teilnehmerstationen, welchen Subbänder zugewiesen sind. In Figur 2 ist der Fall dargestellt, dass sieben Subbänder der Teilnehmerstation MSx, vier Subbänder der Teilnehmerstation MSy, und fünf Subbänder der Teilnehmerstation MSz zugewiesen sind. Bei den zugewiesenen Subbändern handelt es sich jeweils um Blöcke B1, B2 und B3 von untereinander benachbarten Subbändern, d.h. zwischen den einer Teilnehmerstation zugewiesenen Subbändern liegen keine Subbänder, welche einer anderen Teilnehmerstation zugewiesen sind. Die zweite Betriebsweise MODE2 erweist sich als flexibler, da die Funkressourcen mit größerer Granularität an Teilnehmerstationen zugewiesen werden können, so dass eine möglichst effiziente Ausnutzung der zur Verfügung stehenden Subbänder in der zweiten Betriebsweise MODE2 realisiert werden kann.

Die Entscheidung darüber, zu welchen Zeitpunkten die erste oder die zweite Betriebsweise MODE1 bzw. MODE2 eingesetzt wird, hängt von der Art der Dienste ab, welche die Teilnehmerstationen in Aufwärtsrichtung nutzen. So ist es vorteilhaft, Datendienste oder auch Multimediadienste wie z.B. Videoübertragungen, welche eine große Übertragungsbandbreite benötigen, in der ersten Betriebsweise MODE1 zu bedienen. Hingegen sollten für Dienste mit niedrigen Datenraten und insbesondere für zeitkritische Anwendungen wie z.B. Sprachübertragungen wie VoIP (Voice over IP) Subbänder während der zweiten Betriebsweise MODE2 zur Verfügung gestellt werden. Alle Subbänder Teilnehmerstationen, welche nur einen geringen Umfang an Nachrichten, wie z.B. ausschließlich die erforderliche Signalisierung an die Basisstation übertragen, gemäß der ersten Betriebsweise zuzuordnen, wäre eine Verschwendung der in der Regel knappen Funkressourcen. Typische Signalisierungsdaten wie z.B. ARQ Daten benötigen in der Regel nur ein Byte während ein OFDM-Symbol in der ersten Betriebsweise MODE1 je nach Subbandanzahl und Modulationsverfahren bis zu 1000 Byte übertragen kann.

Gemäß dem OFDM-Verfahren sind die einzelnen Subbänder in dem Sinne orthogonal zueinander, dass ein auf einem Subband gesendetes Signal im Frequenzraum einen Nulldurchgang bei den zentralen Frequenzen aller anderen Subbänder aufweist. Werden einer Teilnehmerstation gemäß der ersten Betriebsweise MODE1 alle Subbänder zugewiesen, so können die Signale, welche die jeweilige Teilnehmerstation auf den unterschiedlichen Subbändern sendet, von der Basisstation vollständig voneinander getrennt werden, bis auf diejenigen Interferenzerscheinungen, die dadurch entstehen, dass eine mangelhafte Synchronisierung im Zeit- und im Frequenzbereich zwischen der Teilnehmerstation und der Basisstation vorliegt. Werden hingegen gemäß der zweiten Betriebsweise MODE2 verschiedene Subbänder verschiedenen Teilnehmerstationen zur Kommunikation in Aufwärtsrichtung zugewiesen, besteht das Problem, dass die Orthogonalität zwischen den einzelnen Subbändern zerstört wird durch mangelnde Zeit- und Frequenzsynchronisierung zwischen den Teilnehmerstationen, hervorgerufen oder verstärkt z.B. durch die Auswirkungen des Doppler-Effekts. Die ICI (Inter Carrier Interference, Interferenz zwischen den einzelnen Subbändern) äußert sich in diesem Fall als MAI (Mulitple Access Interference, Vielfachzugriffsinterferenz). Wird die MAI nicht behoben, indem die Teilnehmerstationen untereinander synchronisiert werden, ist die Kompensation der Zeit- und Frequenzverschiebungen der Signale verschiedener Teilnehmerstationen in der Basisstation sehr aufwendig. Andererseits existieren bislang keine Lösungen, wie die Asynchronität zwischen verschiedenen Teilnehmerstationen in der Aufwärtsrichtung von OFDM-Systemen beseitigt werden kann.

Innerhalb der Blöcke von Subbändern, die den einzelnen Teilnehmerstationen zugewiesen sind, liegt keine MAI vor. Die ICI innerhalb der Blöcke kann dadurch behoben werden, dass die Teilnehmerstationen mit der Basisstation synchronisiert werden. Am Rand der Blöcke jedoch entsteht in der Regel MAI. Es werden im folgenden verschiedene Möglichkeiten vorgeschlagen, um die MAI am Rande der Blöcke zu reduzieren. In Funkkommunikationssystemen, bei welchen eine Zeit- und Frequenzsynchronisation zwischen verschiedenen Teilnehmerstationen vorliegt, kann das Verfahren gemäß Figur 2 realisiert werden, ohne dass die im folgenden anhand der Figuren 3 bis 5 vorgeschlagenen Modifikationen der zweiten Betriebsweise MODE2 Einsatz finden.

In Figur 3 ist der Fall dargestellt, dass einer ersten Teilnehmerstation MS1 ein erster Block B1 und einer zweiten Teilnehmerstation MS2 ein zweiter Block B2 an Subbändern zugewiesen ist. Die beiden zwischen den beiden Blöcken B1 und B2 liegenden Subbänder sind keiner Teilnehmerstation zugewiesen, bleiben somit also ungenutzt. Durch diese Vorgehensweise kann die Überlappung zwischen den Signalen der beiden Teilnehmerstationen MS1 und MS2 am Rand ihrer Blöcke B1 und B2 zumindest annähernd vollständig vermieden werden. Von Nachteil ist hierbei jedoch, dass die Anzahl der für die Funkübertragung nutzbaren Subbänder sinkt, und somit die effektive Ausnutzung der Funkressourcen reduziert wird. Die Anzahl der Subbänder, welche zwischen den Blöcken B1 und B2 frei gelassen werden, kann von der Synchronisierung zwischen den Teilnehmerstationen MS1 und MS2 abhängig gemacht werden. So kann die MAI zwischen den beiden Teilnehmerstationen MS1 und MS2 von der Basisstation bestimmt werden und die Anzahl der frei gelassenen Subbänder in Abhängigkeit von der Höhe der MAI bestimmt werden. Hierbei gilt, dass die Anzahl der frei gelassenen Subbänder mit steigender MAI zunehmen sollte. Nicht nur die tatsächlich vorhandene, auch die erwünschte Synchronisierung kann als Maß für die Anzahl an frei gelassenen Subbändern verwendet werden. So existieren bestimmte Dienste, welche eine hohe Übertragungsqualität und somit eine gute Synchronisierung erfordern. Zwischen für diese Dienste eingesetzten Subbändern und Subbändern einer anderen Teilnehmerstation sollten dann eine größere Anzahl an frei gelassenen Subbändern liegen.

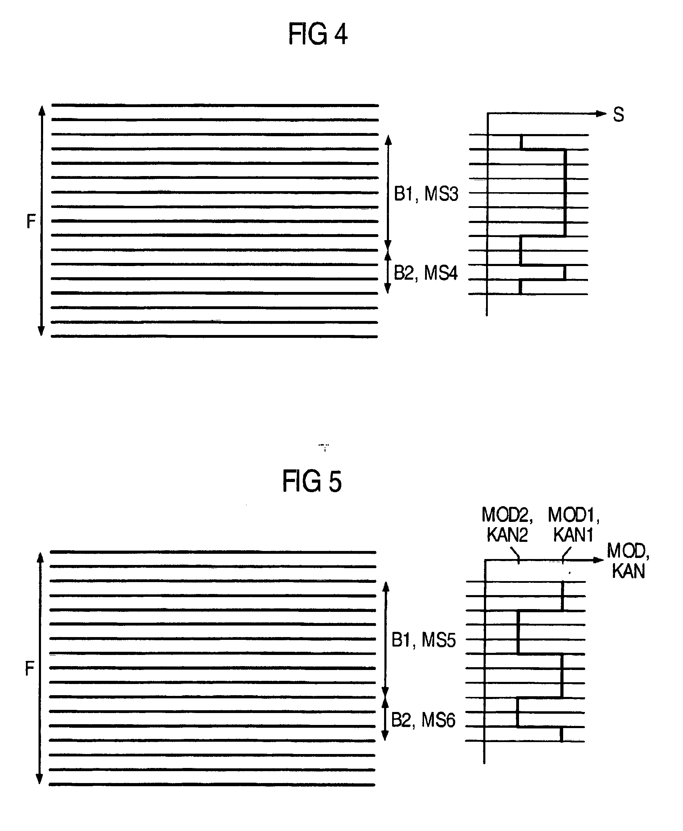

Figur 4 zeigt eine zweite Möglichkeit zur Reduzierung der MAI am Rand von Blöcken. Einer dritten Teilnehmerstation MS3 ist ein erster Block B1 an Subbändern, und einer vierten Teilnehmerstation MS4 ist ein zweiter Block B2 an Subbändern zugewiesen. Der rechte Teil der Figur 4 zeigt die von den Teilnehmerstationen MS3 und MS4 für die verschiedenen Subbänder verwendete Sendeleistung S. Für die mittleren Subbänder verwenden die Teilnehmerstationen MS3 und MS4 eine höhere Sendeleistung als für die jeweils am Rand liegenden Subbänder. Dies kann in den Teilnehmerstationen durch Verwendung geeigneter Filter realisiert werden. Die Höhen der unterschiedlichen Sendeleistungen S gemäß Figur 4 stellen lediglich ein Beispiel dar. Im allgemeinen können sich die von verschiedenen Teilnehmerstationen für die Subbänder in der Mitte und die Subbänder am Rand verwendeten Sendeleistungen S voneinander unterscheiden. Die Entscheidung darüber, für wie viele Subbänder am Rand eine reduzierter Sendeleistung S zu verwenden ist, und welche Sendeleistung für die Subbänder am Rand angewendet wird, kann - wie oben in Bezug auf die frei gelassenen Bänder beschrieben- in Abhängigkeit von der Synchronisierung oder der Art des Dienstes getroffen werden. Die jeweiligen Teilnehmerstationen werden dann von der Basisstation instruiert, welche Sendeleistung S für die jeweiligen Subbänder anzuwenden ist. In dem Fall, dass die zu verwendende Sendeleistungen S für die Subbänder in der Mitte und am Rand vorab festgelegt wurde, kann eine Signalisierung durch die Basisstation unterbleiben.

Eine weitere Möglichkeit zur Reduzierung Auswirkungen der MAI ist in Figur 5 dargestellt, wo einer fünften Teilnehmerstation MS5 ein erster Block B1 an Subbändern und einer sechsten Teilnehmerstation MS6 ein zweiter Block B2 an Subbändern zugewiesen ist. Im rechten Teil der Figur 5 ist dargestellt, dass die Teilnehmerstationen MS5 und MS6 für die Subbänder am Rand der Blöcke B1 und B2 ein anderes Modulationsverfahren MOD1 und/oder ein anderes Kanalkodierverfahren KAN1 verwenden als für die Subbänder in der Mitte, für welche das Modulationsverfahren MOD2 und/oder das Kanalkodierverfahren KAN2 eingesetzt wird. So kann z.B. für die Subbänder am Rand ein QPSK (Quadrature Phase Shift Keying) Modulationsverfahren in Kombination mit einer Kanalkodierung der Rate ½ angewendet werden, und für die anderen Subbänder ein 64-QAM (Quadrature Amplitude Shift Keying) Modulationsverfahren in Kombination mit einer Kanalkodierung der Rate ¾. Die Anzahl der am Rand liegenden Subbänder, für welche eine andere Modulation bzw. Kanalkodierung eingesetzt wird, und die Art des Modulations- bzw. Kanalkodierungsverfahrens kann wie oben beschrieben von der aktuellen und/oder benötigten Synchronisierung und auch vom jeweiligen Dienst abhängig gemacht werden.

Es ist möglich, die drei in den Figuren 3 bis 5 vorgestellten Möglichkeiten zu einem Zeitpunkt in Bezug auf verschiedene Blöcke bzw. Ränder von Blöcken einzusetzen. Auch die gleichzeitige Anwendung mehrere der drei Möglichkeiten in Bezug auf einen Block oder auf einen Rand eines Blocks ist denkbar. Welche der verschiedenen Möglichkeiten Einsatz findet, kann netzseitig insbesondere in Abhängigkeit von der für die verschiedenen Möglichkeiten erforderliche Komplexität der Teilnehmerstationen entschieden werden. So erfordert das Freilassen von Subbändern zwischen zwei Blöcken keine zusätzliche Fähigkeit von den beteiligten Teilnehmerstationen, während die anderen beiden Möglichkeiten nur in Bezug auf hierfür geeignet ausgestatte Teilnehmerstationen angewandt werden kann. Weiterhin kann berücksichtigt werden, dass der Signalisierungsaufwand für die Möglichkeit des Freilassens von Subbändern am geringsten ist, da in diesem Fall den Teilnehmerstationen lediglich mitgeteilt werden muss, welche Subbänder ihnen zugewiesen sind. Auch eine gegenseitige Beeinflussung der verschiedenen Möglichkeiten kann berücksichtigt werden: so kann die Anzahl der freigelassenen Subbänder davon abhängen, welche Sendeleistung und/oder Kanalkodierungs- bzw. Modulationsverfahren für die Subbänder am Rand der jeweiligen Blöcke verwendet wird.

Im Fall, dass aktuell weniger Subbänder zur Versendung von Nachrichten benötigt werden, als Subbänder zur Verfügung stehen, d.h. wenn die Funkressourcen aktuell nicht knapp sind, sollte aufgrund der oben beschriebenen Schwierigkeiten mit der MAI die erste Betriebsweise MODE1 verwendet werden. Besteht in diesem Fall ein Problem wegen der Zeitschlitzstruktur der ersten Betriebsweise MODE1, so z.B. wenn von wenigen Teilnehmerstationen kontinuierlich ein Datenstrom mit niedriger Bitrate gesendet werden soll, so besteht auch die Möglichkeit, diese Übertragungen gemäß der zweiten Betriebsweise MODE2 zu realisieren, wobei den Teilnehmerstationen jeweils wenige, weit von Subbändern der anderen Teilnehmerstationen entfernte, Subbänder zugewiesen werden. Dies entspricht der Verwendung einer Vielzahl an freien Subbändern zwischen den einzelnen Blöcken.

Die vorgestellte Kombination der beiden Betriebsweisen MODE1 und MODE2 erweist sich in mehrfacher Hinsicht als vorteilhaft: in der ersten Betriebsweise MODE1 kann einer Teilnehmerstation eine große Bandbreite zur Funkübertragung zugewiesen werden, ohne dass das Problem der MAI entsteht. Weisen die von den Teilnehmerstationen in Anspruch genommenen Dienste bzw. die zu versendenden Informationsflüsse hingegen solche Charakteristika auf, dass die Verwendung der ersten Betriebsweise MODE1 zu einer Verschwendung von Funkressourcen führen würde, oder dass ein Dienst mit durch eine Zeitschlitzstruktur hervorgerufene Unterbrechung des Zur-Verfügung-Stehens von Subbändern nicht realisiert werden kann, so findet ein Wechsel zu der zweiten Betriebsweise MODE2 statt. In dieser Betriebsweise ist eine höhere Granularität bei der Zuweisung von Funkressourcen möglich, jedoch existiert der Nachteil des Auftretens der MAI. Zur Reduzierung des Effektes der MAI wird vorgeschlagen, jeder Teilnehmerstation einen Block, welcher aus einem oder mehreren untereinander im Frequenzbereich benachbarten Subbändern besteht, zuzuweisen, so dass die MAI nur am Rande von Blöcken auftritt. Zur weiteren Reduzierung der MAI am Rande der Blöcke können Subbänder zwischen den Blöcken frei gelassen werden oder mit niedrigerer Sendeleistung und/oder verändertem Modulations- und/oder Kanalkodierverfahren betrieben werden. Die beschriebene Verwendung der beiden Betriebsweisen MODE1 und MODE2 ermöglicht es somit, die sich wechselseitig beeinflussenden Größen der Granularität der Ressourcenzuweisung und der Synchronisierung zwischen verschiedenen Teilnehmerstationen effizient im Hinblick auf Ressourcenausnutzung und Übertragungsqualität zu kombinieren.

Während die Erfindung in Bezug auf die Aufwärtsrichtung der Kommunikation in einer Funkzelle eines zellularen Funkkommunikationssystems näher erläutert wurde, ist es auch möglich, das erfindungsgemäße Verfahren in einem Adhoc-System einzusetzen. In diesem Fall kommunizieren die Teilnehmerstationen des Adhoc-Systems, welches Bestandteil eines zellularen Systems oder eines WLAN sein kann, direkt miteinander. Die Funkressourcen für diese Kommunikation werden dann wie oiben beschrieben unter Verwendung der beiden Betriebsweisen von einer der Teilnehmerstationen vergeben.

## Patentansprüche

1. Verfahren zur Zuweisung von Subbändern eines in eine Mehrzahl von Subbändern aufgeteiltes Frequenzbandes (F) in zumindest einem Teilbereich eines Funkkommunikationssystems, bei dem
• zeitweise gemäß einer ersten Betriebsweise (MODE1) alle für die Versendung von Signalen durch Funkstationen (MS; MSx, MSy, MSz; MS1, MS2, MS3, MS4, MS5, MS6) zur Verfügung stehenden benachbarten Subbänder jeweils einer Funkstation (MSx, MSy, MSz) zur Versendung von Signalen zugewiesen werden, wobei all diese Subbänder nacheinander jeweils einer verschiedenen Funkstation (MS; MSx, MSy, MSz; MS1, MS2, MS3, MS4, MS5, MS6) zugewiesen werden,
• zeitweise gemäß einer zweiten Betriebsweise (MODE2) einer Mehrzahl von Funkstationen (MSx, MSy, MSz; MS1, MS2, MS3, MS4, MS5, MS6) unterschiedliche Subbänder des Frequenzbandes (F) zur Versendung von Signalen zugewiesen werden, wobei es sich bei dem oder den einer jeden Funkstation (MSx, MSy, MSz; MS1, MS2, MS3, MS4, MS5, MS6) der Mehrzahl von Funkstationen zugewiesenen Subbändern um jeweils einen Block (B1, B2, B3) von untereinander benachbarten Subbändern handelt,
• in der zweiten Betriebsweise (MODE2) eine zweite Anzahl an Subbändern, welche sich am Rande des Blocks (B1, B2) von einer dritten Funkstation (MS3, MS4) zugewiesenen Subbändern befinden und zu einem einer vierten Funkstation (MS3, MS4) zugewiesenen Block (B1, B2) von Subbändern benachbart sind, von der dritten Funkstation (MS3, MS4) zur Versendung von Signalen mit einer niedrigeren Sendeleistung (S) als das der zweiten Anzahl an Subbändern benachbarte der dritten Funkstation (MS3, MS4) zugewiesene Subband verwendet wird, und
• ein Wechsel zwischen der ersten und der zweiten Betriebsweise (MODE1, MODE2) abhängig von mindestens einem von mindestens einer Funkstation (MS; MSx, MSy, MSz; MS1, MS2, MS3, MS4, MS5, MS6) in Anspruch genommenen Dienst erfolgt.

2. Verfahren nach Anspruch 1, bei dem
in der ersten Betriebsweise (MODE1) zumindest zeitweise jeder Funkstation (MSx, MSy, MSz), welcher die Subbänder zugewiesen werden, die Subbänder für die gleiche Zeitspanne zugewiesen werden.

3. Verfahren nach einem der Ansprüche 1 bis 2, bei dem in der zweiten Betriebsweise (MODE2) zumindest zeitweise jeder Funkstation (MSx, MSy, MSz), welcher eines oder mehrere Subbänder zugewiesen werden, diese Subbänder für die gleiche Zeitspanne zugewiesen werden.

4. Verfahren nach einem der Ansprüche 1 bis 3, bei dem in der zweiten Betriebsweise (MODE2) eine erste Anzahl an Subbändern zwischen dem einer ersten Funkstation (MS1) und dem einer zweiten Funkstation (MS2) zugewiesenen Block (B1, B2) an Subbändern keiner Funkstation zugewiesen wird.

5. Verfahren nach Anspruch 4, bei dem
die erste Anzahl an Subbändern von einer Synchronisierung zwischen von der ersten und der zweiten Funkstation (MS1, MS2) gesendeten Signalen und/oder von einem von der ersten Funkstation (MS1) und/oder der zweiten Funkstation (MS2) in Anspruch genommenen Dienst abhängt.

6. Verfahren nach Anspruch 1, bei dem
die zweite Anzahl an Subbändern und/oder die für die zweite Anzahl an Subbändern verwendete Sendeleistung (S) von einer Synchronisierung zwischen von der dritten und der vierten Funkstation (MS3, MS4) gesendeten Signalen und/oder von einem von der dritten Funkstation (MS3, MS4) und/oder der vierten Funkstation (MS3, MS4) in Anspruch genommenen Dienst abhängt.

7. Verfahren nach einem der Ansprüche 1 bis 6, bei dem in der zweiten Betriebsweise (MODE2) eine dritte Anzahl an Subbändern, welche sich am Rande des Blocks (B1, B2) von einer fünften Funkstation (MS5, MS6) zugewiesenen Subbändern befinden und zu einem einer sechsten Funkstation (MS5, MS6) zugewiesenen Block (B1, B2) von Subbändern benachbart sind, von der fünften Funkstation (MS5, MS6) zur Versendung von Signalen mit einer anderen Kanalkodierung (KAN1) und/oder Modulation (MOD1) als das der dritten Anzahl an Subbändern benachbarte der fünften Funkstation (MS5, MS6) zugewiesene Subband verwendet wird.

8. Verfahren nach Anspruch 7, bei dem
die dritte Anzahl an Subbändern und/oder die für die dritte Anzahl an Subbändern verwendete Kanalkodierung (KAN1) und/oder Modulation (MOD1) von einer Synchronisierung zwischen von der fünften und der sechsten Funkstation (MS5, MS6) gesendeten Signalen und/oder von einem von der fünften Funkstation (MS5, MS6) und/oder der sechsten Funkstation (MS5, MS6) in Anspruch genommenen Dienst abhängt.

9. Verfahren nach einem oder mehreren der Ansprüche 1, 4, 7, bei dem eine Einrichtung (CONTROL)
die Zuweisung einer ersten Anzahl an Subbändern zwischen dem einer ersten Funkstation (MS1) und dem einer zweiten Funkstation (MS2) zugewiesenen Block (B1, B2) an Subbändern an keine Funkstation, und/oder
die Verwendung einer zweiten Anzahl an Subbändern, welche sich am Rande des Blocks (B1, B2) von einer dritten Funkstation (MS3, MS4) zugewiesenen Subbändern befinden und zu einem einer vierten Funkstation (MS3, MS4) zugewiesenen Block (B1, B2) von Subbändern benachbart sind, von der dritten Funkstation (MS3, MS4) zur Versendung von Signalen mit einer niedrigeren Sendeleistung (S) als das der zweiten Anzahl an Subbändern benachbarte der dritten Funkstation (MS3, MS4) zugewiesene Subband, und/oder die Verwendung einer dritten Anzahl an Subbändern, welche sich am Rande des Blocks (B1, B2) von einer fünften Funkstation (MS5, MS6) zugewiesenen Subbändern befinden und zu einem einer sechsten Funkstation (MS5, MS6) zugewiesenen Block (B1, B2) von Subbändern benachbart sind, von der fünften Funkstation (MS5, MS6) zur Versendung von Signalen mit einer anderen Kanalkodierung (KANN1) und/oder Modulation (MOD1) als das der dritten Anzahl an Subbändern benachbarte der fünften Funkstation (MS5, MS6) zugewiesene Subband,
anweist in Abhängigkeit von mindestens einer Eigenschaften von mindestens einer Funkstation (MS1, MS2, MS3, MS4, MS5, MS6).

10. Verfahren nach einem der Ansprüche 1 bis 9, bei dem sich die Anzahl der Subbänder, in welche das Frequenzband (F) in der ersten Betriebsweise aufgeteilt ist, von der Anzahl der Subbänder, in welche das Frequenzband (F) in der zweiten Betriebsweise aufgeteilt ist, unterscheidet.

11. Einrichtung (CONTROL)in einem Funkkommunikationssystem, wobei zur Versendung von Signalen durch Funkstationen (MS; MSx, MSy, MSz; MS1, MS2, MS3, MS4, MS5, MS6) in zumindest einem Teilbereich des Funkkommunikationssystems ein in eine Mehrzahl von Subbändern aufgeteiltes Frequenzband (F) verwendet wird,
mit Mitteln zum Zuweisen von Subbändern des Frequenzbandes (F) an Funkstationen (MS; MSx, MSy, MSz; MS1, MS2, MS3, MS4, MS5, MS6) zur Versendung von Signalen, so dass
• zeitweise gemäß einer ersten Betriebsweise (MODE1) alle für die Versendung von Signalen durch Funkstationen (MS; MSx, MSy, MSz; MS1, MS2, MS3, MS4, MS5, MS6) zur Verfügung stehenden benachbarten Subbänder jeweils einer Funkstation (MSx, MSy, MSz) zur Versendung von Signalen zugewiesen sind, wobei all diese Subbänder nacheinander jeweils einer verschiedenen Funkstation (MS; MSx, MSy, MSz; MS1, MS2, MS3, MS4, MS5, MS6) zugewiesen sind,
und
• zeitweise gemäß einer zweiten Betriebsweise (MODE2) einer Mehrzahl von Funkstationen (MSx, MSy, MSz; MS1, MS2, MS3, MS4, MS5, MS6) unterschiedliche Subbänder des Frequenzbandes (F) zur Versendung von Signalen zugewiesen sind, wobei es sich bei dem oder den einer jeden Funkstation (MSx, MSy, MSz; MS1, MS2, MS3, MS4, MS5, MS6) der Mehrzahl von Funkstationen zugewiesenen Subbändern um jeweils einen Block (B1, B2, B3) von untereinander benachbarten Subbändern handelt, und
• ein Wechsel zwischen der ersten und der zweiten Betriebsweise (MODE1, MODE2) abhängig von mindestens einem von mindestens einer Funkstation (MS; MSx, MSy, MSz; MS1, MS2, MS3, MS4, MS5, MS6) in Anspruch genommenen Dienst erfolgt, in der zweiten Betriebsweise (MODE2) eine zweite Anzahl an Subbändern, welche sich am Rande des Blocks (B1, B2) von einer dritten Funkstation (MS3, MS4) zugewiesenen Subbändern befinden und zu einem einer vierten Funkstation (MS3, MS4) zugewiesenen Block (B1, B2) von Subbändern benachbart sind, von der dritten Funkstation (MS3, MS4) zur Versendung von Signalen mit einer niedrigeren Sendeleistung (S) als das der zweiten Anzahl an Subbändern benachbarte der dritten Funkstation (MS3, MS4) zugewiesene Subband verwendet wird.

12. Einrichtung (CONTROL) nach Anspruch 11, mit Mitteln zum Versenden von Anweisungen an Funkstationen (MS3, MS4, MS5, MS6) betreffend bezüglich sich am Rand von Blöcken befindliche Subbänder die Verwendung einer bestimmten von der Sendeleistung (S) der Subbänder in der Mitte des jeweiligen Blockes (B1, B2) unterschiedlichen Sendeleistung (S) und/oder einer bestimmten von der Kanalkodierung (KAN2) der Subbänder in der Mitte des jeweiligen Blockes (B1, B2) unterschiedlichen Kanalkodierung (KAN1) und/oder einer bestimmten von der Modulation (MOD2) der Subbänder in der Mitte des jeweiligen Blockes (B1, B2) unterschiedlichen Modulation (MOD1).

## Claims

1. Method for allocating subbands of a frequency band (F) that is split into a plurality of subbands in at least one subregion of a radio communication system, in which
• intermittently, on the basis of a first mode (MODE1), all adjacent subbands that are available for the sending of signals by radio stations (MS; MSx, MSy, MSz; MS1, MS2, MS3, MS4, MS5, MS6) are allocated to a respective radio station (MSx, MSy, MSz) for the sending of signals, all of these subbands being successively allocated to a respective different radio station (MS; MSx, MSy, MSz; MS1, MS2, MS3, MS4, MS5, MS6),
• intermittently, on the basis of a second mode (MODE2), different subbands of the frequency band (F) are allocated to a plurality of radio stations (MSx, MSy, MSz; MS1, MS2, MS3, MS4, MS5, MS6) for the sending of signals, wherein the subband(s) that is/are allocated to each radio station (MSx, MSy, MSz; MS1, MS2, MS3, MS4, MS5, MS6) from the plurality of radio stations is/are a respective block (B1, B2, B3) of mutually adjacent subbands,
• in the second mode (MODE2), a second number of subbands, which are situated at the edge of the block (B1, B2) of subbands allocated to a third radio station (MS3, MS4) and are adjacent to a block (B1, B2) of subbands that is allocated to a fourth radio station (MS3, MS4), is used by the third radio station (MS3, MS4) for the sending of signals at a lower transmission power (S) than the subband that is adjacent to the second number of subbands and that is allocated to the third radio station (MS3, MS4), and
• a change between the first and second modes (MODE1, MODE2) is effected on the basis of at least one service that is used by at least one radio station (MS; MSx, MSy, MSz; MS1, MS2, MS3, MS4, MS5, MS6).

2. Method according to Claim 1, in which
in the first mode (MODE1), at least intermittently, each radio station (MSx, MSy, MSz) that is allocated the subbands is allocated the subbands for the same period of time.

3. Method according to either of Claims 1 and 2, in which
in the second mode (MODE2), at least intermittently, each radio station (MSx, MSy, MSz) that is allocated one or more subbands is allocated these subbands for the same period of time.

4. Method according to one of Claims 1 to 3, in which
in the second mode (MODE2), a first number of subbands between the blocks (B1, B2) of subbands that are allocated to a first radio station (MS1) and to a second radio station (MS2) is not allocated to a radio station.

5. Method according to Claim 4, in which
the first number of subbands is dependent on synchronization between signals sent by the first and second radio stations (MS1, MS2) and/or on a service that is used by the first radio station (MS1) and/or the second radio station (MS2).

6. Method according to Claim 1, in which
the second number of subbands and/or the transmission power (S) that is used for the second number of subbands is/are dependent on synchronization between signals that are sent by the third and fourth radio stations (MS3, MS4) and/or on a service that is used by the third radio station (MS3, MS4) and/or the fourth radio station (MS3, MS4).

7. Method according to one of Claims 1 to 6, in which
in the second mode (MODE2), a third number of subbands, which are situated at the edge of the block (B1, B2) of subbands allocated to a fifth radio station (MS5, MS6) and are adjacent to a block (B1, B2) of subbands that is allocated to a sixth radio station (MS5, MS6), is used by the fifth radio station (MS5, MS6) for the sending of signals with a different channel coding (KAN1) and/or modulation (MOD1) from the subband that is adjacent to the third number of subbands and that is allocated to the fifth radio station (MS5, MS6).

8. Method according to Claim 7, in which
the third number of subbands and/or the channel coding (KAN1) and/or modulation (MOD1) that is/are used for the third number of subbands is/are dependent on synchronization between signals that are sent by the fifth and sixth radio stations (MS5, MS6) and/or on a service that is used by the fifth radio station (MS5, MS6) and/or the sixth radio station (MS5, MS6).

9. Method according to one or more of Claims 1, 4 and 7, in which a device (CONTROL) instructs
the allocation of a first number of subbands between the blocks (B1, B2) of subbands that are allocated to a first radio station (MS1) and to a second radio station (MS2) to no radio station, and/or
the use of a second number of subbands, which are situated at the edge of the block (B1, B2) of subbands allocated to a third radio station (MS3, MS4) and are adjacent to a block (B1, B2) of subbands that is allocated to a fourth radio station (MS3, MS4), by the third radio station (MS3, MS4) for the sending of signals at a lower transmission power (S) than the subband that is adjacent to the second number of subbands and that is allocated to the third radio station (MS3, MS4), and/or
the use of a third number of subbands, which are situated at the edge of the block (B1, B2) of subbands allocated to a fifth radio station (MS5, MS6) and are adjacent to a block (B1, B2) of subbands that is allocated to a sixth radio station (MS5, MS6), by the fifth radio station (MS5, MS6) for the sending of signals with different channel coding (KAN1) and/or modulation (MOD1) from the subband that is adjacent to the third number of subbands and that is allocated to the fifth radio station (MS5, MS6),
on the basis of at least one property of at least one radio station (MS1, MS2, MS3, MS4, MS5, MS6).

10. Method according to one of Claims 1 to 9, in which
the number of subbands into which the frequency band (F) is split in the first mode differs from the number of subbands into which the frequency band (F) is split in the second mode.

11. Device (CONTROL) in a radio communication system, wherein a frequency band (F) that is split into a plurality of subbands is used for the sending of signals by radio stations (MS; MSx, MSy, MSz; MS1, MS2, MS3, MS4, MS5, MS6) in at least one subregion of the radio communication system,
having means for allocating subbands of the frequency band (F) to radio stations (MS; MSx, MSy, MSz; MS1, MS2, MS3, MS4, MS5, MS6) for the sending of signals, as a result of which
• intermittently, on the basis of a first mode (MODE1), all adjacent subbands that are available for the sending of signals by radio stations (MS; MSx, MSy, MSz; MS1, MS2, MS3, MS4, MS5, MS6) are allocated to a respective radio station (MSx, MSy, MSz) for the sending of signals, all of these subbands being successively allocated to a respective different radio station (MS; MSx, MSy, MSz; MS1, MS2, MS3, MS4, MS5, MS6),
and
• intermittently, on the basis of a second mode (MODE2), different subbands of the frequency band (F) are allocated to a plurality of radio stations (MSx, MSy, MSz; MS1, MS2, MS3, MS4, MS5, MS6) for the sending of signals, wherein the subband(s) that is/are allocated to each radio station (MSx, MSy, MSz; MS1, MS2, MS3, MS4, MS5, MS6) from the plurality of radio stations is/are a respective block (B1, B2, B3) of mutually adjacent subbands, and
• a change between the first and second modes (MODE1, MODE2) is effected on the basis of at least one service that is used by at least one radio station (MS; MSx, MSy, MSz; MS1, MS2, MS3, MS4, MS5, MS6), and in the second mode (MODE2), a second number of subbands, which are situated at the edge of the block (B1, B2) of subbands allocated to a third radio station (MS3, MS4) and are adjacent to a block (B1, B2) of subbands that is allocated to a fourth radio station (MS3, MS4), is used by the third radio station (MS3, MS4) for the sending of signals at a lower transmission power (S) than the subband that is adjacent to the second number of subbands and that is allocated to the third radio station (MS3, MS4).

12. Device (CONTROL) according to Claim 11, having means for the sending of instructions to radio stations (MS3, MS4, MS5, MS6) with regard to, in respect of subbands that are situated at the edge of blocks, the use of a particular transmission power (S) that is different from the transmission power (S) of the subbands in the centre of the respective block (B1, B2) and/or a particular channel coding (KAN1) that is different from the channel coding (KAN2) of the subbands in the centre of the respective block (B1, B2) and/or a particular modulation (MOD1) that is different from the modulation (MOD2) of the subbands in the centre of the respective block (B1, B2).

## Revendications

1. Procédé pour l'allocation de sous-bandes d'une bande de fréquence (F) répartie en une pluralité de sous-bandes dans au moins une zone partielle d'un système de radiocommunication, selon lequel :
- selon un premier mode de fonctionnement (MODE1), toutes les sous-bandes voisines disponibles pour l'envoi de signaux par des stations radio (MS ; MSx, MSy, MSz ; MS1, MS2, MS3, MS4, MS5, MS6) sont allouées temporairement respectivement à une station radio (MSx, MSy, MSz) pour l'envoi de signaux, toutes ces sous-bandes étant respectivement allouées, l'une après l'autre, à une station radio différente (MS ; MSx, MSy, MSz ; MS1, MS2, MS3, MS4, MS5, MS6) ;
- selon un deuxième mode de fonctionnement (MODE2), différentes sous-bandes de la bande de fréquence (F) sont allouées temporairement à une pluralité de stations radio (MSx, MSy, MSz ; MS1, MS2, MS3, MS4, MS5, MS6) pour l'envoi de signaux, la ou les sous-bandes allouées à chaque station radio (MSx, MSy, MSz ; MS1, MS2, MS3, MS4, MS5, MS6) de la pluralité de stations radio étant respectivement un bloc (B1, B2, B3) de sous-bandes voisines les unes des autres ;
- dans le deuxième mode de fonctionnement (MODE2), un deuxième nombre de sous-bandes, qui se trouvent au bord du bloc (B1, B2) de sous-bandes allouées à une troisième station radio (MS3, MS4) et sont voisines d'un bloc (B1, B2) de sous-bandes alloué à une quatrième station radio (MS3, MS4), est utilisé par la troisième station radio (MS3, MS4) pour l'envoi de signaux avec une puissance d'émission (S) inférieure à celle de la sous-bande voisine du deuxième nombre de sous-bandes et allouée à la troisième station radio (MS3, MS4) ; et
- un passage entre les premier et deuxième modes de fonctionnement (MODE1, MODE2) a lieu en fonction d'au moins un service auquel fait appel au moins une station radio (MS ; MSx, MSy, MSz ; MS1, MS2, MS3, MS4, MS5, MS6).

2. Procédé selon la revendication 1, selon lequel les sous-bandes, dans le premier mode de fonctionnement (MODE1), sont allouées au moins temporairement, pour le même intervalle de temps, à chaque station radio (MSx, MSy, MSz) à laquelle les sous-bandes sont allouées.

3. Procédé selon l'une des revendications 1 à 2, selon lequel à chaque station radio (MSx, MSy, MSz), à laquelle sont allouées une ou plusieurs sous-bandes, sont allouées, dans le deuxième mode de fonctionnement (MODE2), ces sous-bandes au moins temporairement et pour le même intervalle de temps.

4. Procédé selon l'une des revendications 1 à 3, selon lequel, dans le deuxième mode de fonctionnement (MODE2), un premier nombre de sous-bandes entre le bloc (B1, B2) de sous-bandes alloué à une première station radio (MS1) et celui alloué à une deuxième station radio (MS2) n'est alloué à aucune station radio.

5. Procédé selon la revendication 4, selon lequel le premier nombre de sous-bandes dépend d'une synchronisation entre des signaux émis par les première et deuxième stations radio (MS1, MS2) et/ou d'un service auquel font appel la première station radio (MS1) et/ou la deuxième station radio (MS2).

6. Procédé selon la revendication 1, selon lequel le deuxième nombre de sous-bandes et/ou la puissance d'émission (S) utilisée pour le deuxième nombre de sous-bandes dépendent d'une synchronisation entre des signaux émis par les troisième et quatrième stations radio (MS3, MS4) et/ou d'un service auquel font appel la troisième station radio (MS3, MS4) et/ou la quatrième station radio (MS3, MS4).

7. Procédé selon l'une des revendications 1 à 6, selon lequel un troisième nombre de sous-bandes, qui se trouvent au bord du bloc (B1, B2) de sous-bandes allouées à une cinquième station radio (MS5, MS6) et qui sont voisines d'un bloc (B1, B2) de sous-bandes alloué à une sixième station radio (MS5, MS6), est, dans le deuxième mode de fonctionnement (MODE2), utilisé par la cinquième station radio (MS5, MS6) pour l'envoi de signaux avec un codage de canal (KAN1) et/ou une modulation (MOD1) autres que dans le cas de la sous-bande voisine du troisième nombre de sous-bandes et allouée à la cinquième station radio (MS5, MS6).

8. Procédé selon la revendication 7, selon lequel le troisième nombre de sous-bandes et/ou le codage de canal (KAN1) et/ou la modulation (MOD1) utilisés pour le troisième nombre de sous-bandes dépendent d'une synchronisation entre des signaux émis par les cinquième et sixième stations radio (MS5, MS6) et/ou d'un service auquel font appel la cinquième station radio (MS5, MS6) et/ou la sixième station radio (MS5, MS6).

9. Procédé selon l'un ou plusieurs des revendications 1, 4, 7, selon lequel un dispositif (CONTROL) ordonne, en fonction d'au moins une caractéristique d'au moins une station radio (MS1, MS2, MS3, MS4, MS5, MS6) :
qu'un premier nombre de sous-bandes entre le bloc (B1, B2) de sous-bandes alloué à une première station radio (MS1) et celui alloué à une deuxième station radio (MS2) ne soit alloué à aucune station radio et/ou qu'un deuxième nombre de sous-bandes, qui se trouvent au bord du bloc (B1, B2) de sous-bandes allouées à une troisième station radio (MS3, MS4) et qui sont voisines d'un bloc (B1, B2) de sous-bandes alloué à une quatrième station radio (MS3, MS4), soit utilisé par la troisième station radio (MS3, MS4) pour l'envoi de signaux avec une puissance d'émission (S) inférieure à celle de la sous-bande voisine du deuxième nombre de sous-bandes et allouée à la troisième station radio (MS3, MS4), et/ou qu'un troisième nombre de sous-bandes, qui se trouvent au bord du bloc (B1, B2) de sous-bandes allouées à une cinquième station radio (MS5, MS6) et qui sont voisines d'un bloc (B1, B2) de sous-bandes alloué à une sixième station radio (MS5, MS6), soit utilisé par la cinquième station radio (MS5, MS6) pour l'envoi de signaux avec un codage de canal (KAN1) et/ou une modulation (MOD1) autres que dans le cas de la sous-bande voisine du troisième nombre de sous-bandes et allouée à la cinquième station radio (MS5, MS6).

10. Procédé selon l'une des revendications 1 à 9, selon lequel le nombre de sous-bandes résultant de la répartition de la bande de fréquence (F) dans le premier mode de fonctionnement est différent du nombre de sous-bandes résultant de la répartition de la bande de fréquence (F) dans le deuxième mode de fonctionnement.

11. Dispositif (CONTROL) d'un système de radiocommunication, une bande de fréquence (F) répartie en une pluralité de sous-bandes étant utilisée dans au moins une zone partielle du système de radiocommunication pour l'envoi de signaux par des stations radio (MS ; MSx, MSy, MSz ; MS1, MS2, MS3, MS4, MS5, MS6), comportant des moyens pour allouer des sous-bandes de la bande de fréquence (F) à des stations radio (MS ; MSx, MSy, MSz ; MS1, MS2, MS3, MS4, MS5, MS6) pour l'envoi de signaux, de sorte que :
- selon un premier mode de fonctionnement (MODE1), toutes les sous-bandes voisines disponibles pour l'envoi de signaux par des stations radio (MS ; MSx, MSy, MSz ; MS1, MS2, MS3, MS4, MS5, MS6) sont allouées temporairement respectivement à une station radio (MSx, MSy, MSz) pour l'envoi de signaux, toutes ces sous-bandes étant respectivement allouées, l'une après l'autre, à une station radio différente (MS ; MSx, MSy, MSz ; MS1, MS2, MS3, MS4, MS5, MS6) ; et
- selon un deuxième mode de fonctionnement (MODE2), différentes sous-bandes de la bande de fréquence (F) sont allouées temporairement à une pluralité de stations radio (MSx, MSy, MSz ; MS1, MS2, MS3, MS4, MS5, MS6) pour l'envoi de signaux, la ou les sous-bandes allouées à chaque station radio (MSx, MSy, MSz ; MS1, MS2, MS3, MS4, MS5, MS6) de la pluralité de stations radio étant respectivement un bloc (B1, B2, B3) de sous-bandes voisines les unes des autres ;
- un passage entre les premier et deuxième modes de fonctionnement (MODE1, MODE2) a lieu en fonction d'au moins un service auquel fait appel au moins une station radio (MS ; MSx, MSy, MSz ; MS1, MS2, MS3, MS4, MS5, MS6) ; dans le deuxième mode de fonctionnement (MODE2), un deuxième nombre de sous-bandes, qui se trouvent au bord du bloc (B1, B2) de sous-bandes allouées à une troisième station radio (MS3, MS4) et qui sont voisines d'un bloc (B1, B2) de sous-bandes alloué à une quatrième station radio (MSs3, MS4), est utilisé par la troisième station radio (MS3, MS4) pour l'envoi de signaux avec une puissance d'émission (S) inférieure à celle de la sous-bande voisine du deuxième nombre de sous-bandes et allouée à la troisième station radio (MS3, MS4).

12. Dispositif (CONTROL) selon la revendication 11, comportant des moyens pour envoyer des ordres à des stations radio (MS3, MS4, MS5, MS6) concernant l'utilisation, pour des sous-bandes qui se trouvent au bord de blocs, d'une puissance d'émission (S) déterminée différente de la puissance d'émission (S) des sous-bandes au milieu du bloc respectif (B1, B2), et/ou d'un codage de canal (KAN1) déterminé différent du codage de canal (KAN2) des sous-bandes au milieu du bloc respectif (B1, B2) et/ou d'une modulation (MOD1) déterminée différente de la modulation (MOD2) des sous-bandes au milieu du bloc respectif (B1, B2).
